Europäisches Patentamt

European Patent Office

Office européen des brevets

(19)

(11) **EP 1 026 518 B1**

(12) **FASCICULE DE BREVET EUROPEEN**

(45) Date de publication et mention
de la délivrance du brevet:
**02.05.2003 Bulletin 2003/18**

(51) Int Cl.⁷: **G01S 11/02**

(21) Numéro de dépôt: **00400316.6**

(22) Date de dépôt: **04.02.2000**

(54) **Procédé d'estimation de la vitesse de déplacement relatif d'un émetteur et d'un récepteur en communication l'un avec l'autre d'un système de télécommunications**

Verfahren zur Abschätzung der Relativgeschwindigkeit zwischen Empfänger und Ssender in einem Telekommunikationssystem

Procedure for estimating the relative velocity between an emitter and a receiver in a telecommunications system

(84) Etats contractants désignés:
**DE ES FR GB IT**

(30) Priorité: **08.02.1999 FR 9901538**

(43) Date de publication de la demande:
**09.08.2000 Bulletin 2000/32**

(73) Titulaire: **Mitsubishi Electric Information Technology Centre Europe B.V.
1119 NS Schiphol Rijk (NL)**

(72) Inventeurs:
• **Mottier, David
35700 Rennes (FR)**
• **Voyer, Nicolas
35700 Rennes (FR)**
• **Castelain, Damien
35700 Rennes (FR)**

(74) Mandataire: **Maillet, Alain
SCP Le Guen & Maillet,
5, Place Newquay,
B.P. 70250
35802 Dinard Cedex (FR)**

(56) Documents cités:
**EP-A- 0 639 930          WO-A-93/00777**

• **AUSTIN M D ET AL: "VELOCITY ADAPTIVE HANDOFF ALGORITHMS FOR MICROCELLULAR SYSTEMS" IEEE TRANSACTIONS ON VEHICULAR TECHNOLOGY, vol. 43, no. 3, PART 01, 1 août 1994 (1994-08-01), pages 549-561, XP000466790 ISSN: 0018-9545**

## Description

La présente invention concerne un procédé d'estimation de la vitesse de déplacement relatif d'un émetteur et d'un récepteur en communication l'un avec l'autre d'un système de télécommunications, tel qu'un réseau cellulaire sans-fil. L'émetteur (ou le récepteur) qui se déplace est logé dans une station mobile et le récepteur (ou l'émetteur) est logé dans une station de base d'un système de télécommunications.

Dans un tel système, les télécommunications se font par voie hertzienne permettant ainsi aux stations mobiles de communiquer tout en se déplaçant. Cependant, le déplacement d'une station mobile en cours de communication a pour effet de générer une perturbation appelée décalage Doppler qui affecte la transmission de l'information. La dégradation apportée par le décalage Doppler est une fonction directe de la vitesse de déplacement de la station mobile.

Pour la station de base comme pour la station mobile, le fait de connaître la vitesse de déplacement de la station mobile peut permettre d'optimiser les paramètres de transmission et d'ajuster les fonctions de traitement du signal utilisées en cours de communication en fonction du déplacement du mobile.

Le but de l'invention est de proposer un procédé qui permette d'estimer la vitesse de déplacement d'une station mobile d'un système de télécommunications par un traitement des signaux transmis entre l'émetteur et le récepteur.

On connaît déjà le document AUSTIN M D ET AL, XP000466790 qui décrit différentes méthodes de handoff adaptatifs selon la vitesse du mobile concerné, par approximations successives de la covariance.

On connaît également le document WO-A-93/00777 qui décrit une méthode de détermination de la vitesse d'une station mobile à partir de la différence entre les réponses impulsionnelles du canal de transmission à deux instants distincts.

Un procédé d'estimation de la vitesse de déplacement relatif d'un émetteur et d'un récepteur en communication l'un avec l'autre via un canal d'un système de télécommunications et au moyen d'une onde porteuse comprend une étape d'analyse des propriétés statistiques des variations de la puissance du canal par détermination de l'autocovariance de la puissance dudit canal ($C(n)$).

Selon l'invention, il consiste à calculer ladite autocovariance ($Cov(C(n)C(n+i))$) pour un instant $(n)$ et une pluralité d'instants $(n+i)$ retardés par rapport à l'instant $(n)$ d'un nombre prédéterminé de retards $(i)$, à déterminer le retard $(i_0)$ pour lequel l'autocovariance atteint son premier minimum, à déduire le décalage Doppler ($\omega_d(n)$) subi par l'onde porteuse au moyen de la relation suivante :

$$\omega_d(n) = K/[i_0(n)\ T_b]$$

où K est une constante et $T_b$ est la durée d'un bit, et à déduire dudit décalage Doppler ladite vitesse de déplacement relatif.

Selon une autre caractéristique de l'invention, il consiste, à partir d'une séquence de $N$ échantillons de la puissance du canal, à déterminer une séquence d'un nombre prédéterminé d'estimations représentatives de la dérivée de l'autocovariance de la puissance du canal, à déterminer le retard pour lequel ladite dérivée de l'autocovariance s'annule et à déduire dudit retard le décalage Doppler.

Selon une autre caractéristique de l'invention, ledit procédé d'estimation consiste à déterminer la densité spectrale de puissance de la puissance du canal afin d'obtenir un spectre en fréquence de ladite puissance du canal, à déterminer parmi les fréquences dudit spectre la fréquence la plus élevée pour laquelle ledit spectre présente un niveau supérieur à un niveau prédéterminé et à déduire de ladite fréquence le décalage Doppler.

La présente invention concerne également un procédé d'estimation tel qu'il vient d'être décrit du type qui est mis en oeuvre dans le récepteur d'un système de télécommunications équipé d'un système de contrôle de puissance par lequel ledit récepteur émet à destination de l'émetteur un signal de contrôle $TC(n)$ pour que ledit émetteur commande sa puissance d'émission afin que la puissance reçue par ledit récepteur soit sensiblement égale à une puissance requise. Ledit procédé consiste alors à estimer la puissance du canal $C(n)$ en fonction de la puissance reçue $R(n)$, au moyen de la relation suivante:

$$C(n) \approx R(n) - 1/(1-z^{-1}).[TC(n-x)]$$

$n$ est la variable temps, $z$ la variable des transformées en $z$, et $x$ le retard total entre le moment où le signal émis par l'émetteur est reçu par le récepteur et le moment où le signal de contrôle est reçu par l'émetteur.

La présente invention concerne encore un procédé d'estimation tel qu'il vient d'être décrit du type qui est mis en oeuvre dans l'émetteur d'un système de télécommunications équipé d'un système de contrôle de puissance par lequel ledit récepteur émet à destination de l'émetteur un signal de contrôle *TC(n)* pour que ledit émetteur commande sa puissance d'émission afin que la puissance reçue par ledit récepteur soit sensiblement égale à une puissance requise. Il consiste alors à estimer la dérivée de l'autocovariance *Cov[C(n),C(n+i)]* de la puissance du canal en l'égalant à la dérivée de l'autocovariance *Cov[T(n),T(n+i)]* de la puissance *T(n)* émise par ledit émetteur :

$$Cov'[C(n),C(n+i)] \approx R_T^t[i](n) \approx \frac{1}{N}\sum_{j=n}^{n+N-1} T(j) \bullet \Delta T(j+i) \qquad pour\ 0 \le i \le i_{max}$$

où

$$\Delta T(j+i) = T(j+i+1) - T(j+i).$$

La présente invention concerne encore un procédé d'estimation qui est du type qui est mis en oeuvre dans le récepteur d'un système de télécommunications qui n'est pas équipé d'un système de contrôle de puissance. Il consiste alors à estimer les variations de la puissance du canal comme étant égales aux variations de la puissance reçue par ledit récepteur.

La présente invention concerne encore un procédé d'estimation tel qu'il vient d'être décrit et qui est mis en oeuvre entre une station fixe et une station mobile communicant l'une avec l'autre à la fois dans un sens montant et dans un sens descendant. Il consiste alors, pour déterminer ledit décalage Doppler, à estimer, en mettant en oeuvre un des procédés précédemment décrits, le décalage Doppler de chacun des canaux montant et descendant et à associer lesdits décalages, par exemple, en une sommation pondérée.

La présente invention concerne encore un récepteur d'un système de télécommunications prévu pour pouvoir entrer en communication avec un émetteur, ledit récepteur comportant une unité pour mesurer la puissance qu'il reçoit d'un émetteur par l'intermédiaire d'un canal, une unité pour comparer ladite puissance reçue avec une puissance requise et pour transmettre un signal de contrôle audit émetteur pour qu'il commande sa puissance d'émission de manière à ce que la puissance reçue par ledit récepteur soit sensiblement égale à ladite puissance requise.

Selon une autre caractéristique de l'invention, ledit récepteur comporte en outre une unité pour estimer la puissance dudit canal à partir de l'information concernant la puissance reçue et du signal de contrôle, et une unité qui, sur la base de l'estimation de la puissance du canal délivrée par l'unité délivre un signal d'estimation du décalage Doppler.

La présente invention concerne encore un émetteur d'un système de télécommunications prévu pour pouvoir entrer en communication avec un récepteur, ledit émetteur recevant dudit récepteur avec lequel il est en communication un signal de contrôle et commandant sa puissance d'émission afin que la puissance reçue par ledit récepteur soit sensiblement égale à une puissance requise.

Selon une autre caractéristique de l'invention, il comporte une unité qui délivre un signal d'estimation du décalage Doppler sur la base d'un signal relatif à la puissance émise par ledit émetteur.

Les caractéristiques de l'invention mentionnées ci-dessus, ainsi que d'autres, apparaîtront plus clairement à la lecture de la description faite en relation avec les dessins joints, parmi lesquels :

La Fig. 1 représente le schéma synoptique d'un système de télécommunications auquel la présente invention peut être appliquée,
La Fig. 2 est un diagramme qui illustre les différentes étapes d'un procédé selon la présente invention,
La Fig. 3 représente le schéma synoptique d'un système de télécommunications auquel la présente invention peut être appliquée, ledit système étant pourvu d'un système de contrôle en boucle fermée de la puissance reçue par le récepteur,
La Fig. 4 est un schéma synoptique d'un récepteur prévu pour mettre en oeuvre un procédé selon la présente invention,
La Fig. 5 est un schéma synoptique d'un émetteur qui est prévu pour pouvoir mettre en oeuvre un procédé selon la présente invention, et
La Fig. 6 est un schéma synoptique d'un système de télécommunications pouvant mettre en oeuvre un procédé selon la présente invention.

Dans la suite de la description, on sera amené à utiliser des grandeurs qui varient avec le temps *t*. Or, les calculs qui sont effectués pour la mise en oeuvre du procédé de l'invention sont des calculs numériques, c'est-à-dire qui utilisent des grandeurs qui sont discrètes. Ainsi, le temps *t* est constitué d'intervalles de temps élémentaires que l'on appelle fenêtres de temps.

De ce fait, lorsqu'on exprimera la variable temps numérique dans sa généralité, on utilisera la lettre *n* où *n* représente un nombre entier.

Egalement, dans la suite de la description, les puissances sont exprimées en décibels et sont désignées par des lettres majuscules.

Par ailleurs, on sera également amené à utiliser la transformée en *z*. On rappelle que la transformée en *z* d'un signal prenant respectivement pendant des fenêtres de temps {*0, 1, ..., n, ...*} les valeurs {*f(0), f(1), ..., f(n), ...*} est la fonction suivante du nombre complexe *z* :

$$F(z) = f(0) + \frac{f(1)}{z} + ... + \frac{f(n)}{z^n} + ...$$

On rappelle que la fonction retard de *x* fenêtres de temps a pour transformée en *z* la fonction $1/z^x = z^{-x}$.

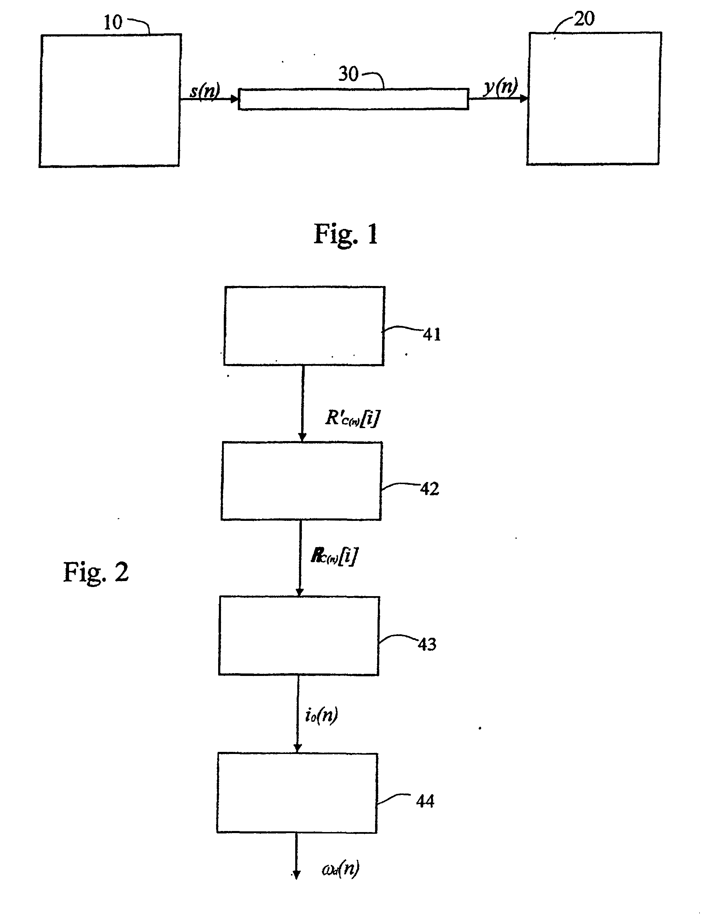

La présente invention peut être appliquée à un système de télécommunications du type de celui qui est représenté à la Fig. 1. Ce système comporte un émetteur 10, un canal 30, un récepteur 20. Par exemple, l'émetteur 10 considéré est logé dans une station de base d'un réseau de télécommunications sans-fil et le récepteur 20 est logé dans une station mobile ou réciproquement.

L'émetteur 10 émet, sur une porteuse de pulsation $\omega_0$ (voir annexe I) et dans une fenêtre de temps d'indice *n* (*n* est un entier), un signal *s(n)* dont la puissance d'émission *T(n)* est, dans le canal 30, l'objet d'une modification de puissance *C(n)* qui varie avec le temps. Le récepteur 20 reçoit ainsi un signal *y(n)* dont la puissance *R(n),* est donnée, si l'on considère que toutes les grandeurs de puissance sont exprimées en décibels, par la somme de la puissance *T (n)* émise par l'émetteur 10 et de la modification de puissance *C(n)* dans le canal 30, soit la relation suivante exprimée en décibels :

$$R(n) = T(n) + C(n)$$

Par la suite, la modification de puissance *C(n)* est nommée puissance du canal 30.

Selon la présente invention, l'estimation de la vitesse de déplacement relatif de l'émetteur 10 et du récepteur 20 consiste à analyser la variation dans le canal 30 entre l'émetteur 10 et le récepteur 20 de la puissance *C(n)* (exprimée ou non en décibels) ou de l'amplitude du signal émis par ledit émetteur 10 et à déduire de ladite analyse le décalage Doppler $\omega_d(n)$ subi par la porteuse de pulsation $\omega_0$ et delà, ladite vitesse (voir annexe I).

Ladite analyse consiste en une évaluation des propriétés statistiques et/ou spectrales des variations de la puissance *C(n)* dudit canal 30.

On notera que, dans le cas particulier du système de télécommunications représenté à la Fig. 1 qui ne comporte pas de système de contrôle de la puissance reçue par le récepteur 20 et en faisant l'hypothèse que la puissance *T(n)* du signal émis l'émetteur 10 est invariante dans le temps, les variations de puissance du canal *C(n)* sont également les variations de la puissance reçue *R(n)* du signal *y(n)* reçu par le récepteur 20.

Selon l'invention, la détermination du décalage Doppler (noté $\omega_d(n)$) dû au déplacement du mobile est effectuée, à chaque instant *n*, en déterminant, en fonction d'un retard *i*, l'autocovariance de la puissance du canal *C(n)* due au canal 30 entre l'émetteur 10 et le récepteur 20 et prise en un temps *n* et un temps *n + i* retardé par rapport au temps *n* dudit retard *i*, en déterminant le retard $i_0(n)$ pour lequel l'autocovariance atteint son premier minimum et en en déduisant le décalage Doppler $\omega_d(n)$.

On rappelle que l'autocovariance de la puissance du canal *C(n)* prise en un temps *n* et un temps n + *i* retardé dudit retard *i* est donnée par l'expression :

$$Cov[C(n),C(n+i)] = R_{C(n)}[i] - E[C(n)]^2$$

Ou encore :

$$Cov[C(n),C(n+i)] = E[C(n), C(n+i)] - E[C(n)]^2$$

Dans ces expressions, *E* est l'espérance mathématique et $R_{C(n)}$ est la fonction d'autocorrélation de la puissance du canal *C(n)*. On a pu montrer *[voir annexe I]* que le décalage Doppler $\omega_d(n)$ est donné par la relation simplifiée

suivante :

$$\omega_d(n) = K/[i_0(n)T_b]$$

Où $K$ est une constante qui est théoriquement égale à *3,8317*.

Comme on le verra par la suite, on déduira de la valeur du retard $i_0(n)$ le décalage Doppler $\omega_d(n)$, par exemple en considérant une valeur empirique de la constante $K$ ou, par exemple encore, au moyen d'une table donnant le décalage Doppler $\omega_d$ correspondant à chaque retard $i_0$.

On sait que déterminer les retards pour lesquels l'autocovariance *Cov[C(n),C(n+i)]* présente des minima et maxima consiste à chercher les valeurs du retard $i$ pour lesquelles la dérivée de l'autocovariance s'annule.

On a également pu montrer *(voir annexe II)* que, déterminer la position du premier extremum non nul de la covariance à l'instant *n*, revient à déterminer la position du premier extremum non nul de la fonction d'autocorrélation $R_{c(n)}[i]$, c'est-à-dire le retard $i_0$ pour lequel sa dérivée s'annule :

$$\frac{\partial}{\partial i}\left(R_{C(n)}[i_0]\right) = 0$$

On a pu montrer (voir également annexe II) que cela revient à déterminer $i_0(n)$ tel que :

$$\sum_{j=n}^{n+N-1} C(j) \bullet \Delta C(j + i_0(n)) = 0$$

Par exemple, pour déterminer le retard $i_0(n)$ plus petit nombre positif non nul tel que la dérivée de l'autocorrélation $R_{C(n)}[i_0(n)]$ est nulle, on détermine deux retards consécutifs *a* et *b* tels que les dérivées de l'autocorrélation pour ces deux retards soient de signes opposés :

$$\frac{\partial}{\partial i}\left(R_{C(n)}[a]\right) \text{ et } \frac{\partial}{\partial i}\left(R_{C(n)}[b]\right) \text{ de signes opposés}$$

On recherche donc deux entiers consécutifs *a* et *b* tels que :

$$\frac{\partial}{\partial i}\left(R_{C(n)}[a]\right) \bullet \frac{\partial}{\partial i}\left(R_{C(n)}[b]\right) \leq 0$$

$$\Leftrightarrow \left\{\sum_{j=n}^{n+N-1} C(j) \bullet \Delta C(j+a)\right\} \bullet \left\{\sum_{j=n}^{n+N-1} C(j) \bullet \Delta C(j+b)\right\} \leq 0$$

$$\text{où } \quad b = a + 1$$

Puis, ayant déterminé *a* et *b*, on calcule $i_0(n)$ par interpolation linéaire, soit :

$$i_0(n) = \frac{\left\{\sum_{j=n}^{n+N-1} C(j) \bullet \Delta C(j+b)\right\} \bullet a - \left\{\sum_{j=n}^{n+N-1} C(j) \bullet \Delta C(j+a)\right\} \bullet b}{\sum_{j=n}^{n+N-1} C(j) \bullet \left(\Delta C(j+b) - \Delta C(j+a)\right)}$$

Comme on le comprendra d'après les annexes I et II, la méthode de la présente invention exposée ici repose sur l'hypothèse d'une propagation du signal en un ensemble de trajets ayant subi le même retard de propagation r unique. En réalité, la propagation du signal se fait par trajets multiples arrivant au niveau du récepteur à des instants différents. Le procédé de l'invention rend alors compte d'un décalage Doppler moyen.

On a représenté à la Fig. 2 un schéma synoptique d'un procédé de l'invention qui est ainsi décomposé en quatre étapes consécutives.

A l'étape 41, on calcule, pour un instant $n$, à partir d'une séquence de $N$ échantillons de la puissance du canal $C(n)$ et pour chaque retard $i$ de valeurs comprises entre une valeur nulle ($i = 0$) et une valeur maximale prédéterminée ($i = i_{max}$), une estimation $R'_{C(n)}[i]$ de la dérivée de l'autocorrélation de la puissance $C(n)$ du canal aller 31. Une telle estimation de la dérivée de l'autocovariance de la puissance du canal peut s'écrire [voir annexe II] :

$$Cov'[C(n), C(n+i)] = R'_{C(n)}[i] \approx \frac{1}{N} \sum_{j=n}^{n+N-1} C(j) \bullet \Delta C(j+i) \quad pour \ 0 \leq i \leq i_{max}$$

La valeur prise par le paramètre $N$ du nombre d'échantillons analysés pour chaque estimation doit assurer un compromis entre, d'une part, un nombre suffisamment grand d'échantillons afin de pouvoir effectuer une moyenne correcte du résultat et, d'autre part, un nombre petit afin de pouvoir considérer que ce résultat doit correspondre à un décalage Doppler unique, c'est-à-dire à une accélération nulle du mobile.

Si la vitesse de déplacement du mobile est constante, plus le nombre d'échantillons $N$ croît, plus l'estimation effectuée à l'étape 41 est fiable. Cependant, le retard introduit par le calcul de cette estimation croît aussi puisque ce retard est égal au produit de la durée d'une fenêtre de temps par le nombre d'échantillons $N$.

Par contre, si la vitesse de déplacement du mobile est variable, il convient de choisir le nombre d'échantillons $N$ de telle sorte que la vitesse de déplacement du mobile puisse être considérée comme constante pendant la durée du calcul.

Par exemple, pour le standard UMTS; la structure des fenêtres de temps permet de délivrer un signal de contrôle de puissance en boucle fermée $TC(n)$ tous les 0,625 ms. Les échantillons de la puissance du canal $C(n)$ sont donc mis à jour tous les 0,625 ms. Le retard introduit par le calcul est alors de 0,625 x $N$ ms.

Pratiquement, on peut considérer que la vitesse de déplacement d'un mobile ne varie pas significativement (variations inférieures à 10km/h) pendant une période de 0,5s, soit environ *800* fenêtres de temps du système UMTS. Cette approximation peut s'appliquer au déplacement en train, en automobile, à vélo ou à pieds. Appliquée au standard UMTS, cette approximation consiste donc à considérer que *800* fenêtres de temps consécutives subissent le même décalage Doppler.

Néanmoins, pratiquement, utiliser *800* échantillons rend l'estimation de la dérivée de l'autocovariance sensible aux perturbations instantanées. Pour s'affranchir de ces perturbations, il peut être nécessaire de lisser l'estimation à l'aide d'un filtrage du type passe-bas (voir étape 42).

Le nombre d'échantillons $N$ de la séquence analysée est par exemple ajustable selon la plage présumée de la vitesse relative de l'émetteur 10 et du récepteur 20, et/ou la plage présumée de l'accélération relative de l'émetteur 10 et du récepteur 20. Il peut également être ajustable selon la régularité d'émission des signaux de commande de contrôle de puissance.

La valeur $i_{max}$ du retard maximum à traiter doit permettre de détecter le premier changement de pente de la fonction de covariance $Cov[C(n), C(n+i)]$.

Le choix de sa valeur dépend du contexte applicatif. Cette valeur est par exemple ajustable selon la plage présumée de la vitesse relative de l'émetteur 10 et du récepteur 20, et/ou selon la plage présumée de l'accélaration relative de l'émetteur 10 et du récepteur 20 et/ou selon la régularité d'émission des signaux de commande de contrôle de puissance $TC(n)$.

On notera que, dans le cadre de l'UMTS, pour garantir la présence dans l'intervalle $[0, i_{max}]$ du retard $i_0$ correspondant à l'extremum de la fonction de covariance, on peut fixer $i_{max} = 50$ unités de temps.

Pour s'affranchir du bruit d'estimation présent dans l'estimation de la dérivée $R'_{C(n)}[i]$ de l'autocovariance calculée à l'étape 41, on peut prévoir une étape de filtrage 42 délivrant, pour chaque retard $i$, une valeur filtrée $\mathbb{R}_{C(n)}[i]$.

Cette valeur filtrée $\mathbb{R}_{C(n)}[i]$ peut par exemple s'écrire :

$$\mathbb{R}_{C(n)}[i] = (1-\alpha) \bullet R'_{C(n)}[i] + \alpha \bullet \mathbb{R}_{C(n)}[i-1] \ \forall \ i > 0,$$

*et*

$$\mathbf{R}_{C(n)}[0] = (1-\alpha)\, R'_{C(n)}[0]$$

où $\alpha$ est un facteur d'oubli.

Typiquement, $\alpha=0,9$ assure un bon niveau de filtrage.

Le facteur d'oubli $\alpha$ peut être ajustable selon le niveau de bruit présumé de la transmission du canal 30 entre l'émetteur 10 et le récepteur 20 ou selon la qualité de l'évaluation du rapport signal sur interférence nécessaire au processus de contrôle de puissance en boucle fermée.

Le nombre $N$ d'échantillons de ladite séquence analysée ainsi que la valeur du paramètre $i_{max}$ peuvent également être ajustables selon la valeur prise par le facteur d'oubli ($\alpha$).

Après filtrage, les variations de l'autocovariance sont d'autant plus dilatées par rapport au retard $i$ que le facteur d'oubli $\alpha$ est important. On peut vérifier qu'il y a toujours une bijection entre le décalage Doppler $\omega_d(n)$ (c'est-à-dire la vitesse de déplacement du mobile) et le retard $i_0(n)$ après filtrage.

On notera que l'étape 42 est facultative.

A l'étape 43, on détermine le retard $i_0(n)$ pour lequel la valeur de l'estimation de la dérivée de l'autocovariance calculée à l'étape précédente 42 (ou à l'étape 41 si l'étape 42 n'est pas présente) est annulée.

La recherche de ce retard $i_0(n)$ est par exemple mise en oeuvre de la manière déjà explicitée ci-dessus.

A partir des $i_{max}$ + 1 échantillons $\mathbf{R}_{C(n)}[0]$ à $\mathbf{R}_{C(n)}[i_{max}]$ disponibles, on détermine, à l'étape 43, les valeurs de retard $a$ et $b$ consécutives entre lesquelles le changement de signe de l'estimation de la dérivée a eu lieu. Après interpolation linéaire, est délivrée, à l'issue de cette étape 43, l'estimation du retard $i_0(n)$ correspondant à l'annulation de l'estimation de la dérivée de la fonction d'autocovariance pour la séquence des $N$ échantillons $C(n)$ observés.

A l'étape 44, à partir du retard $i_0(n)$ correspondant au premier changement de pente de la courbe d'autocovariance, on délivre une estimation du décalage Doppler $\omega_d(n)$ correspondant à la séquence d'observation au temps $n$. Une méthode possible consiste à utiliser une table effectuant une correspondance entre les retards possibles et les décalages Doppler (c'est-à-dire les vitesses) associés. Une seconde méthode possible consiste à utiliser une relation empirique de la forme d'une des relations décrites plus haut:

$$\omega_d(n) = K/i_0(n)$$

où $K$ est une constante.

La constante $K$ de cette relation empirique est par exemple ajustable en fonction de la valeur prise par le facteur d'oubli $\alpha$ dudit filtre mis en oeuvre à l'étape 42.

On a pu montrer que l'estimation de la vitesse de déplacement du mobile est dans la pratique possible à 10km/h près.

On notera que l'analyse de la variation dans le canal 30 entre l'émetteur 10 et le récepteur 20 de la puissance $C(n)$ ou de l'amplitude du signal émis par ledit émetteur 10 peut également consister en une évaluation des propriétés spectrales des variations de la puissance $C(n)$ dudit canal 30 ou en l'analyse de l'étalement de la densité spectrale de puissance de ladite puissance $C(n)$. Pour ce faire, ledit procédé d'estimation consiste à déterminer la densité spectrale de puissance de la puissance du canal $C(n)$ afin d'obtenir un spectre en fréquence de ladite puissance du canal $C(n)$, à déterminer parmi les fréquences dudit spectre la fréquence $f_0$ la plus élevée pour laquelle ledit spectre présente un niveau supérieur à un niveau prédéterminé et à déduire de ladite fréquence $f_0(n)$ le décalage Doppler $\omega_d(n)$.

Avantageusement, ledit procédé d'estimation consiste à éliminer les fréquences les plus hautes dudit spectre de fréquences.

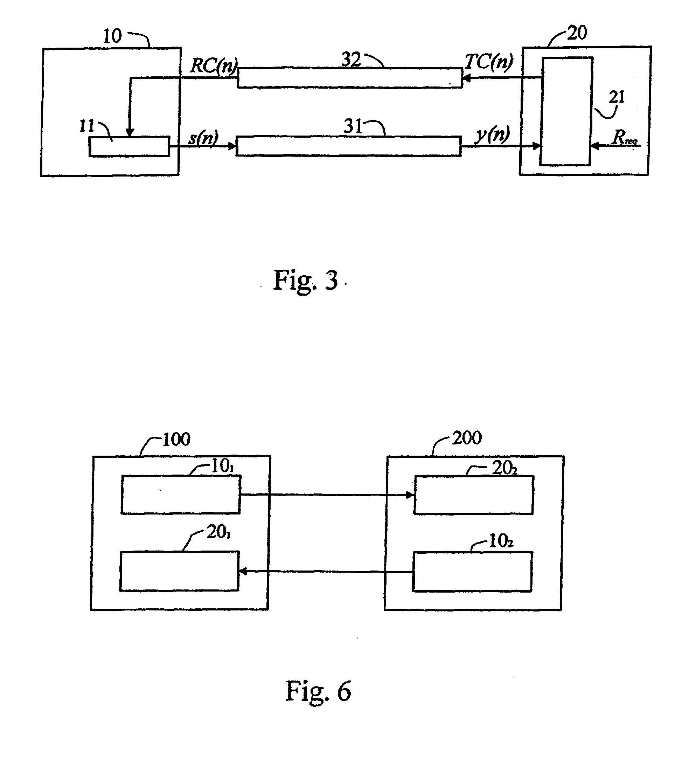

On va maintenant décrire un exemple possible de mise en oeuvre du procédé selon l'invention dans le cas où le système de télécommunications est équipé d'un système en boucle fermée de contrôle de la puissance reçue par le récepteur tel que celui qui est représenté à la Fig. 3.

A la Fig. 3, on peut voir les éléments qui constituent ledit système de contrôle de la puissance reçue par le récepteur 20. Ce système de contrôle comporte, côté émetteur 10, une unité 11 pour commander la puissance d'émission de l'émetteur 10 et, côté récepteur 20, une unité de comparaison 21 prévue pour effectuer la comparaison entre la puissance $R(n)$ du signal $y(n)$ reçu par le récepteur 20 et une puissance requise $R_{req}$.

Le fonctionnement de ce système est le suivant. L'émetteur 10 émet, dans une fenêtre de temps d'indice $n$ ($n$ est un entier), un signal $s(n)$ dont la puissance d'émission $T(n)$ est, dans un canal aller 31, l'objet d'une modification de puissance $C(n)$ qui varie avec le temps. Le récepteur 20 reçoit ainsi un signal $y(n)$ de puissance $R(n)$. Le récepteur 20, sur la base de la puissance $R(n)$ du signal reçu $y(n)$, élabore, par comparaison dans l'unité 21 avec la puissance requise $R_{req}$, un signal de contrôle $TC(n)$ qui est alors transmis, via un canal retour 32, à l'émetteur 10. Dans le canal retour 32, le signal de contrôle $TC(n)$ est l'objet de perturbations si bien que le signal reçu par l'émetteur 10 est un signal $RC(n)$.

Sur la base du signal de contrôle *RC(n)* qu'il reçoit, l'émetteur 10 commande, au moyen de son unité 11, sa puissance d'émission *T(n)* de manière que la puissance reçue *R(n)* par le récepteur 20 soit, aux erreurs près, égale à la puissance requise $R_{req}$.

Le procédé de la présente invention peut être mis en oeuvre, soit dans l'émetteur 10, soit dans le récepteur 20.

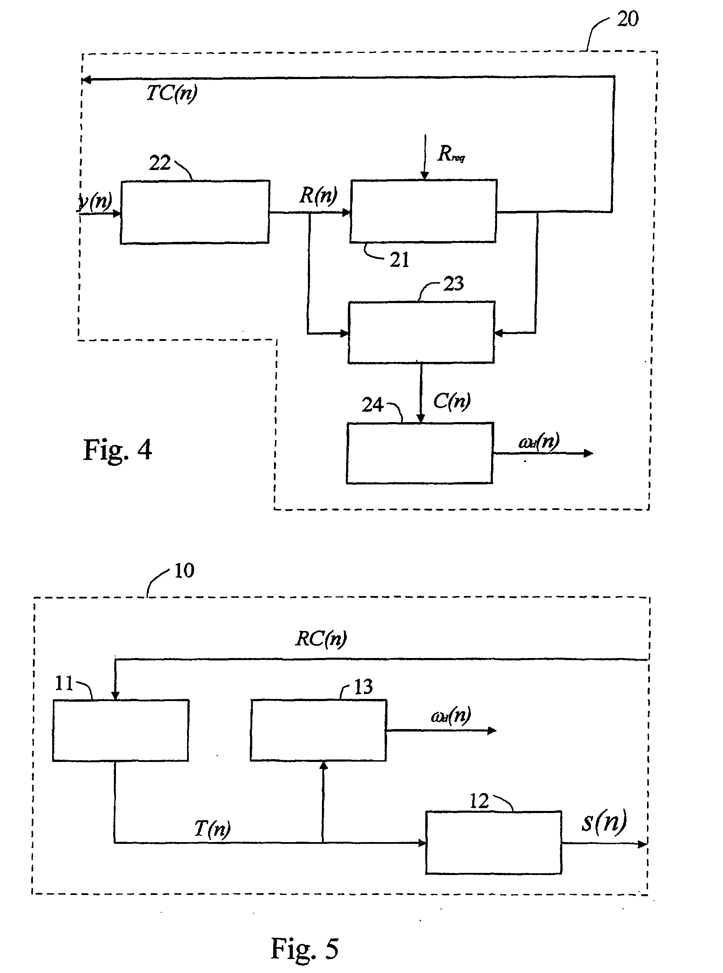

On va décrire un tel procédé dans le cas où celui-ci est mis en oeuvre dans le récepteur 20 et, ce, en relation avec la Fig. 4 qui représente le schéma synoptique d'un récepteur 20 en ce qui concerne les seules fonctions concernant cette mise en oeuvre.

Il comprend l'unité de comparaison 21 pour comparer la puissance *R(n)* du signal *y(n)* reçu de l'émetteur 10 avec une puissance requise $R_{req}$ et pour générer le signal de contrôle *TC(n)*.

Il comprend une unité 22 prévue pour mesurer la puissance du signal *y(n)* reçu par le récepteur 20 et pour délivrer le résultat de cette mesure sous la forme du signal de puissance reçue *R(n)*. On notera que cette unité 21 est par exemple déjà présente dans le récepteur 20 pour d'autres fonctions et ne sera donc pas, dans la pratique, dupliquée pour la mise en oeuvre du procédé de la présente invention.

D comprend encore une unité 23 pour l'estimation de la puissance du canal *C(n)* dans le canal aller 31 (voir Fig. 3).

On rappelle que la puissance du canal *C(n)* est, en décibels, la différence entre la puissance reçue par le récepteur 20 et celle qui est émise par l'émetteur 10, elles-mêmes exprimées en décibels. On a donc :

$$C(n) = R(n) - T(n)$$

Or, d'après cette expression, on constate que le récepteur 20 ne peut pas connaître la valeur exacte de la puissance du canal *C(n)*. L'unité 23 effectue donc une estimation de la puissance du canal *C(n)* en estimant la puissance *T(n)* émise par l'émetteur 10 sur la base du signal de contrôle *TC(n)*.

On considérera que, pour simplifier, le canal retour 32 induit la totalité x des retards de réaction entre le moment où le signal émis *s(n)* par l'émetteur 10 est reçu par le récepteur 20 et le moment où le signal de contrôle *RC(n)* est reçu par l'émetteur 10. Le retard *x* totalise ainsi les temps de calculs, les temps de propagations, le délai de synchronisation, etc. On considérera encore que les erreurs de ce canal retour 32 se concrétisent sous la forme d'une séquence d'erreurs *e(n)*. Ainsi, le signal de contrôle reçu par l'émetteur 10 *RC(n)* peut s'écrire de la manière suivante en fonction du signal de contrôle *TC(n)* émis par le récepteur 20 :

$$RC(n) = TC(n-x) + e(n)$$

Dans l'émetteur 10, l'unité 11 commande la puissance d'émission *T(n)* à partir du signal de contrôle reçu *RC(n)*.

Si le récepteur 20 a la maîtrise du contrôle de puissance de l'émetteur 10, le signal de contrôle *TC(n),* qui est à valeur discrète, est en réalité un signal de commande de contrôle de puissance *TPC(n)* quantifié sur Q bits, qui correspond au nombre de décibels selon lequel le récepteur 20 a estimé qu'il fallait augmenter ou diminuer la puissance *T(n)* émise par l'émetteur 10. La relation qui définit la mise à jour de la puissance *T(n)* peut alors s'écrire :

$$T(n) = T(n-1) + RC(n) = 1/(1-z^{-1}).[TPC(n-x) + e(n)]$$

Et, en négligeant les erreurs de transmission *e(n)* sur le canal retour 32, on a :

$$T(n) \approx 1/(1-z^{-1}).[TPC(n-x)]$$

Par conséquent, la puissance *C(n)* du canal aller 31 calculée par l'unité 23 est donnée par la relation suivante :

$$C(n) \approx R(n) - 1/(1-z^{-1}).[TPC(n-x)]$$

Si, en revanche, l'émetteur 10 a la maîtrise de sa propre puissance d'émission, le signal de contrôle *TC(n)* peut résulter d'une simple comparaison de l'écart de puissance constaté en réception qui est quantifié sur Q bits. L'émetteur 10 traite alors l'information de contrôle de puissance *RC(n)*, par filtrage numérique de fonction de transfert *f(z)*, afin d'évaluer un signal de commande de contrôle de puissance *TPC(n)* à générer pour assurer un niveau de puissance reçu constant au récepteur 20. On a donc :

$$TPC(n) = f(z) \cdot RC(n) = f(z) \cdot [TC(n-x) + e(n)]$$

Le signal de commande de contrôle de puissance *TPC(n)* est alors intégré dans le calcul de la puissance émise *T(n)* comme suit :

$$T(N) = 1/(1-z^{-1}).TPC(n)$$

On peut considérer que le signal de contrôle *TC(n)* délivré par le récepteur 20 est proche du signal de commande de contrôle de puissance *TPC(n)*, au retard *x* près:

$$TPC(n) \approx TC(n-x)$$

Par conséquent, la puissance du canal *C(n)* du canal aller 31 calculée par l'unité 23 est donnée par la relation suivante:

$$C(n) \approx R(n) - 1/(1-z^{-1}).[TC(n-x)]$$

Le récepteur 20 comporte encore une unité 24 qui, sur la base de l'estimation de la puissance du canal *C(n)* délivrée par l'unité 23, délivre un signal d'estimation du décalage Doppler $\omega_d(n)$ pour chaque temps *n*. Cette unité 24 met en oeuvre un procédé d'estimation selon l'invention tel qu'il est exposé ci-dessus.

On va maintenant décrire, en relation avec la Fig. 5, un exemple de mise en oeuvre du procédé de l'invention dans le cas où elle a lieu dans l'émetteur 10 d'un système de télécommunications équipé d'un système de contrôle de puissance en boucle fermée tel que celui qui est représenté à la Fig. 3.

L'estimation du décalage Doppler au sein de l'émetteur 10 ne peut reposer, contrairement au cas précédent, ni sur la connaissance de la puissance *C(n)* apportée par le canal aller 31, ni sur la puissance reçue par le récepteur 20. En revanche, l'émetteur 10 connaît exactement la puissance *T(n)* du signal qu'il émet, et ce quelle que soit la localisation de la gestion du contrôle de puissance.

On a représenté à la Fig. 5, le schéma synoptique d'un émetteur 10 en ce qui concerne les seules fonctions concernant le procédé de l'invention.

Il comprend l'unité de commande 11 qui, sur la base du signal de contrôle *RC(n)* reçu du récepteur 20, délivre, à une unité 12, un signal de commande de puissance *T(n)* pour que cette dernière commande la puissance du signal *s(t)* émis par l'émetteur 10 à la valeur *T(n)*.

On notera que les unités 11 et 12 sont parties intégrantes d'un système de contrôle de puissance en boucle fermée tel que celui qui est représenté à la Fig. 3 et ne sont pas dupliquées pour la mise en oeuvre du présent procédé.

Le procédé de l'invention est mis en oeuvre dans une unité 13 qui délivre alors le signal de décalage Doppler $\omega_d(n)$ au temps *n*.

On a pu montrer *(voir annexe III)* que, globalement, en présence d'un système de contrôle de la puissance reçue, l'autocovariance *Cov[T(n),T(n+i)]* de la puissance émise *T(n)* peut être considérée comme une bonne approximation de l'autocovariance *Cov[C(n),C(n+i)]* de la puissance *C(n)* du canal aller 31. En conséquence, une estimation peut s'écrire, pour une séquence de *N* échantillons et pour un retard *i* compris entre 0 et $i_{max}$ :

$$Cov'[C(n),C(n+i)] \approx R'_{T(n)}[i] \approx \frac{1}{N} \sum_{j=n}^{n+N-1} T(j) \bullet \Delta T(j+i) \qquad pour\ 0 \leq i \leq i_{max}$$

où

$$\Delta T(j+i) = T(j+i+1) - T(j+i).$$

C'est cette fonction qui est mise en oeuvre dans l'unité 13 représentée à la Fig. 5. Ensuite, comme précédemment, est recherché le premier retard $i_0(n)$ pour lequel ladite dérivée est annulée et est déduite, de ce retard $i_0(n)$, la valeur du décalage. Doppler $\omega_d(n)$.

On a représenté à la Fig. 6, une station fixe 100 constituée d'un émetteur $10_1$ et d'un récepteur $20_1$ et une station mobile 200 constituée d'un émetteur $10_2$ et d'un récepteur $20_2$.

L'émetteur $10_1$ est en communication, dans le sens dit montant, avec le récepteur $20_2$ et, de même, l'émetteur $10_2$ est en communication, dans le sens dit descendant, avec le récepteur $20_1$. Dans chacun des sens montant et descendant, peut être mis en oeuvre un procédé d'estimation selon l'invention. Les valeurs estimées de décalage Doppler $\omega_{dm}(n)$ et $\omega_{dd}(n)$ ainsi estimées sont alors associées pour déterminer une valeur estimée du décalage Doppler $\omega_d(n)$.

Par exemple, cette association prend la forme d'une somme pondérée :

$$\omega_d(n) = \alpha_1 . \omega_{dm}(n) + \alpha_2 . \omega_{dd}(n)$$

où $\omega_{dm}(n)$ et $\omega_{dd}(n)$ sont respectivement les valeurs estimées du décalage Doppler dans le sens montant et dans le sens descendant et $\alpha_1$ et $\alpha_2$ sont des coefficients de pondération.

Par exemple, chacune des mises en oeuvre du procédé de l'invention dans le sens montant et dans le sens descendant se fait dans la même station.

## ANNEXE I

Considérons le cas d'une communication entre une station fixe (par exemple une station de base de réseau cellulaire) et une station mobile se déplaçant à la vitesse $V$ et émettant à destination de la station fixe un signal $s(t)$ tel que :

$$s(t) = u(t) . e^{j\omega_0 t}$$

où $u(t)$ est l'amplitude du signal à transmettre et $\omega_0$ est la pulsation de la porteuse Radio Fréquence.

Du fait des obstacles, par exemple des habitations, ponts ou autres, qui sont situés entre la station mobile et la station fixe, ce signal émis $s(t)$ se propage selon différents trajets. Chacun de ces trajets d'indice $i$ est caractérisé par :

une atténuation $a_i$,
une phase aléatoire $\phi_l$ qui suit une distribution uniforme,
un retard de propagation $\tau_i$, et
un décalage Doppler $\omega_{dt}$ dû au déplacement de la station mobile et défini comme:

$$\omega_d t = (2\pi)/\lambda \cdot V \cdot \cos(\alpha_i)$$

où $\lambda$ est la longueur de l'onde porteuse, $V$ est la vitesse de déplacement du mobile, $\alpha_i$ est l'angle de projection de la direction du trajet $i$ sur le vecteur vitesse de déplacement de la station mobile.

En définitive, le signal reçu $y(t)$ par la station fixe est la somme des signaux reçus dans chaque direction $i$, soit :

$$y(t) = \Sigma \alpha_i . u(t-\tau_i) . e^{j[(\omega 0+\omega 1)(t-\tau i)+\phi i]}$$

Pratiquement, à chaque instant $\tau_k$, un ensemble de trajets considérés comme provenant de directions équi-réparties arrivent au niveau du récepteur. En regroupant dans le modèle en bande de base la contribution des trajets ayant subi le même retard de propagation $\tau_k$, le signal reçu s'écrit :

$$y(t) = \sum_k A_k(t) \bullet u(t - \tau_k)$$

Les coefficients $A_k(t)$ sont alors supposés suivre une distribution de Rayleigh dont la représentation spectrale $A_k(f)$ est donnée par la relation :

$$A_k(f) = \frac{1}{\sqrt{1-\left(\frac{f}{f_d}\right)^2}}$$

où $f_d$ est la fréquence Doppler maximale définie par la relation :

$$f_d = \frac{f_0 \cdot v_{max}}{c}$$

où $f_0$ définit alors la fréquence de transmission, $v_{max}$ la vitesse maximale du mobile et $c$ la célérité de la lumière.

En faisant l'hypothèse d'un seul ensemble de trajets arrivant au même instant $\tau_k$, la puissance reçue à l'instant $n$ au niveau du récepteur est notée :

$$c(n) = |A_k(n)|^2$$

En notant $C(n)$ la valeur de $c(n)$ en décibels, on a :

$$C(n) = 10 \log_{10} c(n)$$

L'autocovariance de la variable $C(n)$ est définie par l'une des relations suivantes :

$$Cov[C(n),C(n+i)] = R_{C(n)}[i] - E[C(n)]^2$$

ou

$$Cov[C(n),C(n+i)] = E[C(n), C(n+i)] - E[C(n)]^2$$

Où $Cov$ est la fonction covariance, $E$ l'espérance mathématique et $R_c$ la fonction d'autocorrélation de la puissance du canal.

On peut montrer que l'autocovariance de la variable $C(n)$ peut s'écrire sous la forme :

$$Cov[C(n),C(n+i)] = \gamma^2 J_0[\omega_d(n) \, i \, T_b]^2 \, (\Phi\{J_0[\omega_d(n) \, i \, T_b]^2, 2, 1\})$$

où :

$\gamma = 10/\ln(10)$
$\omega_d(n) = 2\pi f_d(n),$
$T_b$ est la durée d'un bit,
$J_0(x)$ est la fonction de Bessel d'ordre 0, et

$$z\Phi\{z,2,1\} = \sum_{n=1}^{+\infty} \frac{z^n}{n^2}$$

L'autocovariacnce $Cov[C(n),C(n+i)]$ de la puissance du canal exprimée en décibels est ainsi une fonction du décalage Doppler $\omega_d(n)$ dû au déplacement du mobile à l'instant $n$.

La fonction $z.\Phi\{z,2,1\}$ étant croissante, les minima (respectivement les maxima) de l'autocovariance $Cov[C(n),C(n+i)]$ sont les minima (respectivement les maxima) de la fonction de Bessel $J_0(x)$. Les valeurs pour lesquelles la fonction de Bessel $J_0(x)$ présente des minima et des maxima font l'objet de tables. Ainsi, pour des valeurs positives de la variable $x$ ($x>0$), le premier changement de signe (au fur et à mesure que $x$ croît) de la fonction de Bessel $J_0(x)$

a lieu à la valeur *x=3,8317*.

En conséquence, le premier minimum ou maximum de l'autocovarianc *Cov[C(n),C(n+i)] a* lieu pour un retard de propagation $i_0$ vérifiant l'équation :

$$\omega_d\, i_0\, T_b = 2\pi f_d\, i_0\, T_b = 3{,}8317$$

**ANNEXE II**

La dérivée *Cov'[C(n),C(n+i)]* de l'autocovariance *Cov[C(n),C(n+i)]* s'écrit :

$$Cov'[C(n),C(n+i)] = \frac{\partial}{\partial i}\big(Cov[C(n),C(n+i)]\big)$$

$$\Leftrightarrow Cov'[C(n),C(n+i)] = \frac{\partial}{\partial i}\big(E[C(n)\bullet C(n+i)] - E[C(n)]^2\big)$$

$$\Leftrightarrow Cov'[C(n),C(n+i)] = \frac{\partial}{\partial i}\big(E[C(n)\bullet C(n+i)]\big)$$

$$\Leftrightarrow Cov'[C(n),C(n+i)] = \frac{\partial}{\partial i}\big(R_{C(n)}[i]\big)$$

Ce résultat montre que la fonction d'autocorrélation $R_{C(n)}[i]$ suffit pour déterminer la position du premier extremum non nul de la covariance *Cov[C(n),C(n+i)]*.

Or, une approximation de la fonction d'autocorrélation $R_{C(n)}[i]$ s'écrit :

$$R_{C(n)}[i] \approx \frac{1}{N}\sum_{j=n}^{n+N-1} C(j)\bullet C(j+i)$$

Sachant par ailleurs que :

$$\frac{\partial}{\partial i}\big(R_{C(n)}[i]\big) \approx R_{C(n)}[i+1] - R_{C(n)}[i]$$

on obtient :

$$\frac{\partial}{\partial i}\big(R_{C(n)}[i]\big) \approx \frac{1}{N}\sum_{j=n}^{n+N-1} C(j)\bullet C(j+i+1) - \frac{1}{N}\sum_{j=n}^{n+N-1} C(j)\bullet C(j+i)$$

$$\Leftrightarrow \frac{\partial}{\partial i}\big(R_{C(n)}[i]\big) \approx \frac{1}{N}\sum_{j=n}^{n+N-1} C(j)\bullet\big(C(j+i+1) - C(j+i)\big)$$

$$\Leftrightarrow \frac{\partial}{\partial i}\big(R_{C(n)}[i]\big) \approx \frac{1}{N}\sum_{j=n}^{n+N-1} C(j)\bullet\Delta C(j+i)$$

Finalement, on peut considérer que :

$$\frac{\partial}{\partial i}\left(R_{C(n)}[i_0]\right) = 0$$

$$\Leftrightarrow \sum_{j=n}^{n+N-1} C(j) \bullet \Delta C(j+i_0) = 0$$

Considérons l'autocovariance de la puissance émise par l'émetteur prise en un temps $n$ et un temps $n + i$ retardé dudit retard $i$ et donnée par l'expression :

$$Cov[T(n),T(n+i)] = E[T(n).T(n+i)] - E[T(n)]^2$$

Où $T(n)$ est la puissance émise par l'émetteur à l'instant $n$.

Dans un système de télécommunications entre un émetteur et un récepteur, la puissance d'émission $T(n)$ de l'émetteur peut s'écrire, en fonction de la puissance reçue $R(n)$ par le récepteur et la puissance dans le canal $C(n)$ :

$$T(n) = R(n) - C(n)$$

S'il existe un système de contrôle de la puissance $R(n)$ reçue par le récepteur, la puissance $R(n)$ est égale à une puissance requise $R_{req}$ à une erreur près $\varepsilon(n)$ :

$$R(n) = R_{req} + \varepsilon(n)$$

Soit:

$$T(n) = R_{req} + \varepsilon(n) - C(n)$$

En conséquence, l'autocovariance de la puissance émise par l'émetteur peut s'écrire

$$Cov[\, T(n),T(n+i)] = E\{(\, R_{req}+\varepsilon(n)-C(n)\,)\,.\,(\, R_{req}+\varepsilon(n+i)-C(n+i)\,)\} - E[\, R_{req}+\varepsilon(n)-C(n)]^2$$

En la développant et en appliquant la linéarité de l'espérance mathématique, l'expression ci-dessus devient :

$$Cov[T(n),T(n+i)] = E[R_{req}{}^2] + E[R_{req}.\,\varepsilon(n+i)] - E[R_{req}.\,C(n+i)] + E[R_{req}.\varepsilon(n)] - E[R_{req}.\,C(n)]$$

$$+ \, E[\varepsilon(n).\varepsilon(n+i)] + E[C(n).C(n+i)] - E[C(n).\varepsilon(n+i)] - E[\varepsilon(n).C(n+i)] - E[R_{req}]^2$$

$$- \, E[\varepsilon(n)]^2 - E[C(n)]^2 - 2E[R_{req}]\,E[\varepsilon(n)] + 2E[R_{req}]\,E[C(n)] + 2E[C(n)]E[\varepsilon(n)]$$

Sachant que la puissance requise $R_{req}$ est constante, et considérant par ailleurs que $E[C(n)]=E[C(n+i)]$ et que $E[\varepsilon(n)]=E[\varepsilon(n+i)]$, on obtient :

$$Cov[T(n),T(n+i)] = E[C(n).C(n+i)] - E[C(n)]^2 + E[\varepsilon(n).\varepsilon(n+i)] - E[\varepsilon(n)]^2$$

$$-E[C(n).\varepsilon(n+i)] - E[\varepsilon(n).C(n+i)] + 2E[C(n)]E[\varepsilon(n)]$$

Finalement, on obtient:

$$Cov[T(n),T(n+i)] = Cov[C(n),C(n+i)] + Cov[\varepsilon(n),\varepsilon(n+i)] - E[C(n).\varepsilon(n+i)]$$

$$- E[\varepsilon(n).C(n+i)] + 2E[C(n)]E[\varepsilon(n)]$$

En faisant l'hypothèse simplificatrice d'indépendance des processus $C(n)$ et $\varepsilon(n)$, on obtient :

$$Cov[T(n),T(n+i)] = Cov[C(n),C(n+i)] + Cov[\varepsilon(n),\varepsilon(n+i)]$$

où $Cov[C(n),C(n+i)]$ définit l'autocovariance de la puissance du canal et $Cov[\varepsilon(n),\varepsilon(n+i)]$ l'autocovariance du bruit apporté par le système de contrôle de puissance.

Finalement, en faisant l'hypothèse d'un système de contrôle de puissance performant pour lequel on peut considérer que le terme $Cov[\varepsilon(n),\varepsilon(n+i)]$ est négligeable, on obtient :

$$Cov[T(n),T(n+i)] \approx Cov[C(n),C(n+i)]$$

Ainsi, en présence d'un système de contrôle de la puissance reçue $R(n)$, l'autocovarianc $Cov[T(n),T(n+i)]$ de la puissance émise $T(n)$ peut être considérée comme une bonne approximation de l'autocovariance $Cov[C(n),C(n+i)]$ de la puissance $C(n)$ apportée par le canal.

**Revendications**

1. Procédé d'estimation de la vitesse de déplacement relatif d'un émetteur et d'un récepteur en communication l'un avec l'autre via un canal d'un système de télécommunications et au moyen d'une onde porteuse, le procédé comprenant une étape d'analyse des propriétés statistiques des variations de la puissance du canal par détermination de l'autocovariance de la puissance dudit canal ($C(n)$), **caractérisé en ce qu'**il consiste à calculer ladite autocovariance ($Cov(C(n)C(n+i))$) pour un instant ($n$) et une pluralité d'instants ($n+i$) retardés par rapport à l'instant (n) d'un nombre prédéterminé de retards ($i$), à déterminer le retard ($i_0$) pour lequel l'autocovariance atteint son premier minimum, à déduire le décalage Doppler ($\omega_d(n)$) subi par l'onde porteuse au moyen de la relation suivante :

$$\omega_d(n) = K/[i_0(n)\ T_b]$$

où $K$ est une constante et $T_b$ est la durée d'un bit, et à déduire dudit décalage Doppler ladite vitesse de déplacement relatif.

2. Procédé d'estimation selon la revendication 1, **caractérisé en ce que**, pour déterminer le retard ($i_0(n)$) pour lequel ladite autocovariance atteint son premier minimum, il consiste à déterminer, à partir d'un instant ($n$) et pour $N$ échantillons de puissance du canal ($C(n+j)$ avec $j = 1\ à\ N$), le retard ($i_0(n)$) tel :

$$\sum_{j=n}^{n+N-1} C(j) \bullet \Delta C(j + i_0(n)) = 0$$

avec

$$\Delta C(j+i_0(n)) = C(j+i_0(n)+I) - C(j+i_0(n)).$$

3. Procédé d'estimation selon la revendication 1 ou 2, **caractérisé en ce que**, pour déterminer le retard ($i_0(n)$), il consiste à déterminer les deux retards consécutifs pour lesquels les dérivés respectives de l'autocovariance de la puissance du canal sont de signes opposés et à calculer par extrapolation linéaire à partir desdits deux retards ledit retard ($i_0$).

**4.** Procédé d'estimation selon la revendication 1 , **caractérisé en ce qu'**il consiste, à partir d'une séquence de $N$ échantillons de la puissance du canal ($C(n)$), à déterminer une séquence d'un nombre prédéterminé ($i_{max}$ + 1) d'estimations représentatives, chacune pour un retard ($i$) variant d'une valeur nulle à une valeur maximale ($i_{max}$), de la dérivée ($Cov'[C(n)$, $C(n+i)]$) de l'autocovariance de la puissance du canal ($C(n)$), à déterminer le retard ($i_0$ $(n)$) pour lequel ladite dérivée de l'autocovariance ($Cov'[C(n)$, $C(n+i_o(n))]$) s'annule et à déduire dudit retard ($i_0(n)$) le décalage Doppler ($\omega_d(n)$).

**5.** Procédé d'estimation selon la revendication 4, **caractérisé en ce que** le nombre d'échantillons $N$ de ladite séquence est ajustable selon la plage présumée de la vitesse relative de l'émetteur et du récepteur, et/ou la plage présumée de l'accélération relative de l'émetteur et du récepteur et/ou la régularité d'émission des signaux de commande de contrôle de puissance.

**6.** Procédé d'estimation selon la revendication 4 ou 5, **caractérisé en ce que** le nombre prédéterminé ($i_{max}$ + 1) *d'estimations de la dérivée* ($Cov'[C(n)$, $C(n+i)]$, $i = 0$ à $i_{max}$) de l'autocovariance de la puissance du canal $(C(n))$ est ajustable selon la plage présumée de la vitesse relative de l'émetteur et du récepteur, et/ou la plage présumée de l'accélération relative de l'émetteur et du récepteur et/ou la régularité d'émission des signaux de commande de contrôle de puissance.

**7.** Procédé d'estimation selon une des revendications 4 à 6, **caractérisé en ce que** pour estimer la dérivée ($Cov'[C$ $(n)$, $C(n+i)]$) de l'autocovariance de la puissance du canal ($C(n)$), il consiste à estimer la dérivée de l'autocorrélation ($R_{C(n)}[i]$) de la puissance du canal ($C(n)$).

**8.** Procédé d'estimation selon la revendication 4, 5 ou 6, **caractérisé en ce qu'**il consiste à filtrer dans un filtre passebas les $i_{max}$ + 1 estimations de la dérivée de l'autocovariance ($Cov'[C(n)$, $C(n+i)]$) ou de la dérivée de l'autocorrélation ($R'_{C(n)}[i]$) de la puissance du canal ($C(n)$) avant de déterminer le retard ($i_0(n)$).

**9.** Procédé d'estimation selon la revendication 8, **caractérisé en ce que** ledit filtre délivre pour chaque retard ($i$) une valeur filtrée ($\bar{R}_{C(n)}[i]$) donnée par les relations suivantes :

$$\bar{R}_{C(n)}[i] = (1-\alpha) \cdot R'_{C(n)}[i], \; + \alpha \cdot \bar{R}_{C(n)}[i-1] \; \forall \, i > 0,$$

*et*

$$\bar{R}_{C(n)}[0] = (1-\alpha) \cdot R'_{C(n)}[0].$$

où $\alpha$ est un facteur d'oubli.

**10.** Procédé d'estimation selon la revendication 9, **caractérisé en ce que** le facteur d'oubli ($\alpha$) est ajustable selon le niveau de bruit présumé de la transmission du canal ou selon le résultat de l'évaluation du rapport signal sur interférence nécessaire au processus de contrôle de puissance en boucle fermée.

**11.** Procédé d'estimation selon la revendication 9 ou 10, **caractérisé en ce que** le nombre ($N$) d'échantillons de ladite séquence d'échantillons de la puissance du canal ($C(n)$) est ajustable selon la valeur prise par le facteur d'oubli ($\alpha$).

**12.** Procédé d'estimation selon la revendication 9, 10 ou 11, **caractérisé en ce que** le nombre prédéterminé ($i_{max}$ + 1) d'estimations de la dérivée ($Cov'[C(n)$, $C(n+i)]$, $i = 0$ à $i_{max}$) de l'autocovariance de la puissance du canal $(C(n))$ est ajustable selon la valeur prise par le facteur d'oubli ($\alpha$).

**13.** Procédé d'estimation selon une des revendications 4 à 12, **caractérisé en ce que**, pour déterminer le retard ($i_0$), il consiste à déterminer les deux retards consécutifs pour lesquels les dérivés respectives de l'autocorrélation de la puissance du canal sont de signes opposés et à calculer par extrapolation linéaire à partir desdits deux retards ledit retard ($i_0$).

**14.** Procédé d'estimation selon une des revendications 1 à 13, **caractérisé en ce que** le décalage Doppler $(\omega_d(n))$

est déterminé au moyen d'une table donnant le décalage Doppler ($\omega_d$) correspondant à chaque retard ($i_0$).

**15.** Procédé d'estimation selon une des revendications 1 à 13, **caractérisé en ce que** le décalage Doppler ($\omega_d(n)$) est déterminé au moyen d'une relation empirique de la forme :

$$\omega_d(n) = K/i_0(n)$$

où $K$ est une constante dans l'ensemble des nombres réels, par exemple ajustable selon les conditions de transmission.

**16.** Procédé d'estimation selon la revendication 15 lorsque celle-ci dépend de l'une des revendications 9 à 12, **caractérisé en ce que** la constante $K$ de ladite relation empirique est ajustable en fonction de la valeur prise par le facteur d'oubli ($\alpha$) dudit filtre.

**17.** Procédé d'estimation selon une des revendications précédentes, du type qui est mis en oeuvre dans le récepteur d'un système de télécommunications équipé d'un système de contrôle de puissance par lequel ledit récepteur émet à destination de l'émetteur un signal de contrôle ($TC(n)$) pour que ledit émetteur commande sa puissance d'émission afin que la puissance reçue par ledit récepteur soit sensiblement égale à une puissance requise, **caractérisé en ce qu'**il consiste à estimer la puissance du canal ($C(n)$) en fonction de la puissance reçue ($R(n)$), au moyen de la relation suivante.

$$C(n) \approx R(n) - 1/(1\text{-}z^{-1}).[TC(n\text{-}x)]$$

$n$ est la variable temps, $z$ la variable des transformées en $z$, et $x$ le retard total entre le moment où le signal émis par l'émetteur 10 est reçu par le récepteur 20 et le moment où le signal de contrôle est reçu par l'émetteur 10.

**18.** Procédé d'estimation selon une des revendications 1 à 16, du type qui est mis en oeuvre dans l'émetteur d'un système de télécommunications équipé d'un système de contrôle de puissance par lequel ledit récepteur émet à destination de l'émetteur un signal de contrôle ($TC(n)$) pour que ledit émetteur commande sa puissance d'émission ($T(n)$) afin que la puissance reçue par ledit récepteur soit sensiblement égale à une puissance requise, **caractérisé en ce qu'**il consiste à estimer la dérivée de l'autocovariance ($Cov[C(n),C(n+i)]$) de la puissance du canal en l'égalant à la dérivée de l'autocovariance ($Cov[T(n),T(n+i)]$) de la puissance ($T(n)$) émise par ledit émetteur :

$$Cov'[C(n),C(n+i)] \approx R'_{T(n)}[i] \approx \frac{1}{N}\sum_{j=n}^{n+N-1}T(j)\bullet\Delta T(j+i) \qquad pour\ 0 \leq i \leq i_{max}$$

où

$$\Delta T(j+i) = T(j+i+1) - T(j+i).$$

**19.** Procédé d'estimation selon une des revendications 1 à 16, du type qui est mis en oeuvre dans le récepteur d'un système de télécommunications qui n'est pas équipé d'un système de contrôle de puissance, **caractérisé en ce qu'**il consiste à estimer les variations de la puissance du canal ($C(n)$) comme étant égales aux variations de la puissance reçue ($R(n)$) par ledit récepteur 20.

**20.** Procédé d'estimation selon une des revendications précédentes, ledit procédé étant mis en oeuvre entre une station fixe et une station mobile communicant l'une avec l'autre à la fois dans un sens montant et dans un sens descendant, **caractérisé en ce qu'**il consiste, pour déterminer ledit décalage Doppler, à estimer, en mettant en oeuvre un procédé d'estimation selon une des revendications 1 à 21, le décalage Doppler de chacun des canaux montant et descendant et à associer lesdits décalages ainsi obtenus.

**21.** Procédé d'estimation selon la revendication 20, **caractérisé en ce que** ladite association est une sommation pondérée.

**22.** Récepteur d'un système de télécommunications prévu pour pouvoir entrer en communication avec un émetteur, ledit récepteur comportant une unité (22) pour mesurer la puissance qu'il reçoit d'un émetteur (10) par l'intermédiaire d'un canal (31), une unité (21) pour comparer ladite puissance reçue avec une puissance requise et pour transmettre un signal de contrôle (*TC(n)*) audit émetteur (10) pour qu'il commande sa puissance d'émission (*T(n)*) de manière à ce que la puissance reçue par ledit récepteur soit sensiblement égale à ladite puissance requise, **caractérisé en ce qu'**il comporte en outre une unité (23) pour estimer la puissance dudit canal à partir de l'information concernant la puissance reçue et du signal de contrôle, et une unité (24) qui, sur la base de l'estimation de la puissance du canal délivrée par l'unité (23) et en mettant en oeuvre un procédé d'estimation selon une des revendications 1 à 19, délivre un signal d'estimation du décalage Doppler.

**23.** Emetteur d'un système de télécommunications prévu pour pouvoir entrer en communication avec un récepteur, ledit émetteur recevant dudit récepteur avec lequel il est en communication un signal de contrôle (*RC(n)*) et commandant sa puissance d'émission afin que la puissance reçue par ledit récepteur soit sensiblement égale à une puissance requise, **caractérisé en ce qu'**il comporte une unité (13) qui, sur la base d'un signal relatif à la puissance émise par ledit émetteur et en mettant en oeuvre un procédé d'estimation selon une des revendications 1 à 19 précédentes, délivre un signal d'estimation du décalage Doppler sur la base d'un signal relatif à la puissance émise par ledit émetteur.


**Patentansprüche**

**1.** Verfahren zur Bewertung der relativen Verschiebegeschwindigkeit eines Senders und eines Empfängers, die miteinander über einen Kanal eines Femmeldesystems und mit Hilfe einer Trägerwelle in Verbindung stehen, welches Verfahren einen Schritt der Analyse der statistischen Eigenschaften der Veränderungen der Leistung des Kanals durch Bestimmung der Autokovarianz der Leistung des Kanals (C(n)) umfasst, **dadurch gekennzeichnet, daß** es darin besteht, die Autokovarianz (Cov(C(n)C(n+i))) für einen Zeitpunkt (n) und eine Vielzahl von Zeitpunkten (n+i), die zu einem Zeitpunkt (n) um eine vorbestimmte Anzahl von Verzögerungen (i) verzögert sind, zu berechnen, die Verzögerung ($i_o$) zu bestimmen, bei der die Autokovarianz ihr erstes Minimum erreicht, die Doppler-Verschiebung ($\omega_d(n)$, die die Trägerwelle erlitten hat, mit Hilfe der folgenden Beziehung abzuziehen:

$$\omega_d(n) = K/[i_0(n)\ T_b]$$

wobei K eine Konstante und Tb die Dauer eines Bits ist, und von der Doppler-Verschiebung die relative Verschiebegeschwindigkeit abzuziehen.

**2.** Bewertungsverfahren nach Anspruch 1, **dadurch gekennzeichnet, daß** es zur Bestimmung der Verzögerung ($i_o$ (n)), bei der die Autokovarianz ihr erstes Minimum erreicht, darin besteht, ab einem Zeitpunkt (n) und für N Leistungsmuster des Kanals (C(n+j) wobei j = 1 bis N) die Verzögerung ($i_o(n)$) folgendermaßen zu bestimmen:

$$\sum_{j=n}^{n+N-1} C(j) \bullet \Delta C(j + i_0(n)) = 0$$

wobei

$$\Delta C(j+i_0(n)) = C(j+i_0(n)+I)-C(j+i_0(n)).$$

**3.** Bewertungsverfahren nach Anspruch 1 oder 2, **dadurch gekennzeichnet, daß** es zur Bestimmung der Verzögerung ($i_o(n)$) darin besteht, die beiden aufeinanderfolgenden Verzögerungen, bei denen die jeweiligen Ableitungen der Autokovarianz der Leistung des Kanals entgegengesetzte Vorzeichen besitzen, zu bestimmen und durch lineare Extrapolation aus den beiden Verzögerungen die Verzögerung ($i_o$) zu berechnen.

**4.** Bewertungsverfahren nach Anspruch 1, **dadurch gekennzeichnet, daß** es darin besteht, aus einer Sequenz von N Mustern der Leistung des Kanals (C(n)) eine Sequenz einer vorbestimmten Anzahl ($i_{max}$ + 1) von Bewertungen zu bestimmen, die jeweils für eine Verzögerung (i), die von einem Nullwert zu einem Maximalwert ($i_{max}$) variiert,

der Ableitung (Cov'[C(n), C(n+i)]) der Autokovarianz der Leistung des Kanals (C'(n)) repräsentativ sind, die Verzögerung ($i_o(n)$) zu bestimmen, bei der die Ableitung der Autokovarianz (Cov'[C(n), C(n+$i_o$ (n))]) wegfällt, und von der Verzögerung ($i_o(n)$) die Doppler-Verschiebung ($\omega_d(n)$) abzuziehen.

5. Bewertungsverfahren nach Anspruch 4, **dadurch gekennzeichnet, daß** die Anzahl von Mustern N der Sequenz je nach dem vermutlichen Bereich der relativen Geschwindigkeit des Senders und des Empfängers und/oder dem vermutlichen Bereich der relativen Beschleunigung des Senders und des Empfängers und/oder der Regelmäßigkeit der Entsendung der Steuersignale zur Leistungsregelung angepasst werden kann.

6. Bewertungsverfahren nach Anspruch 4 oder 5, **dadurch gekennzeichnet, daß** die vorbestimmte Anzahl ($i_{max}$ + 1) von Bewertungen der Ableitung (Cov'[C(n), C(n+i)], i = 0 bis $i_{max}$) der Autokovarianz der Leistung des Kanals (C(n)) je nach dem vermutlichen Bereich der relativen Geschwindigkeit des Senders und des Empfängers und/ oder dem vermutlichen Bereich der relativen Beschleunigung des Senders und des Empfängers und/oder der Regelmäßigkeit der Entsendung der Steuersignale zur Leistungsregelung angepasst werden kann.

7. Bewertungsverfahren nach einem der Ansprüche 4 bis 6, **dadurch gekennzeichnet, daß** es zur Bewertung der Ableitung (Cov'[C(n), C(n+i)]) der Autokovarianz der Leistung des Kanals (C(n)) darin besteht, die Ableitung der Autokovarianz ($R_{c(n)}[i]$) der Leistung des Kanals (C(n)) zu bewerten.

8. Bewertungsverfahren nach Anspruch 4, 5 oder 6, **dadurch gekennzeichnet, daß** es darin besteht, in einem Tiefpassfilter die $i_{max}$ +1 Bewertungen der Ableitung der Autokovarianz (Cov'[C(n), C(n+i)]) oder der Ableitung der Autokorrelation ($R'_{c(n)}[i]$) der Leistung des Kanals (C(n)) zu filtern, bevor die Verzögerung ($i_o(n)$) bestimmt wird.

9. Bewertungsverfahren nach Anspruch 8, **dadurch gekennzeichnet, daß** das Filter für jede Verzögerung (i) einen gefilterten Wert ($R_{c(n)}[i]$) liefert, der durch die folgenden Beziehungen gegeben ist:

$$R_{c(n)}[i] = (1-\alpha) \cdot R'_{c(n)}[i]. + \alpha \cdot R_{c(n)}[i-1] \; \forall \, i > 0,$$

und

$$R_{c(n)}[0] = (1-\alpha) \cdot R'_{c(n)}[0].$$

wobei $\alpha$ ein Vernachlässigbarkeitsfaktor ist.

10. Bewertungsverfahren nach Anspruch 9, **dadurch gekennzeichnet, daß** der Vernachlässigbarkeitsfaktor ($\alpha$) je nach dem vermutlichen Lärmpegel der Übertragung des Kanals oder je nach dem Ergebnis der Bewertung der Beziehung des Signals zur erforderlichen Interferenz im Leistungsregelungsverfahren im geschlossenen Wirkungskreis eingestellt werden kann.

11. Bewertungsverfahren nach Anspruch 9 oder 10, **dadurch gekennzeichnet, daß** die Anzahl (N) von Mustern der Mustersequenz der Leistung des Kanals (C(n)) je nach dem vom Vernachlässigbarkeitsfaktor ($\alpha$) angenommenen Wert eingestellt werden kann.

12. Bewertungsverfahren nach Anspruch 9, 10 oder 11, **dadurch gekennzeichnet, daß** die vorbestimmte Anzahl ($i_{max}$ +1) von Bewertungen der Ableitung (Cov'[C(n), C(n+i)], i = 0 bis $i_{max}$) der Autokovarianz der Leistung des Kanals (C(n)) je nach dem von dem Vernachlässigbarkeitsfaktor ($\alpha$) angenommenen Wert angepasst werden kann.

13. Bewertungsverfahren nach einem der Ansprüche 4 bis 12, **dadurch gekennzeichnet, daß** es zur Bestimmung der Verzögerung ($i_o$) darin besteht, die beiden aufeinanderfolgenden Verzögerungen zu bestimmen, bei denen die jeweiligen Ableitungen der Autokorrelation der Leistung des Kanals entgegengesetzte Vorzeichen besitzen, und durch lineare Extrapolation aus diesen beiden Verzögerungen die Verzögerung ($i_o$) zu berechnen.

14. Bewertungsverfahren nach einem der Ansprüche 1 bis 13, **dadurch gekennzeichnet, daß** die Doppler-Verschiebung ($\omega_d(n)$) mit Hilfe einer Tabelle bestimmt wird, die die Doppler-Verschiebung ($\omega_d$) angibt, die jeder Verzögerung ($i_o$) entspricht.

**15.** Bewertungsverfahren nach einem der Ansprüche 1 bis 13, **dadurch gekennzeichnet, daß** die Doppler-Verschiebung ($\omega_d$(n)) mit Hilfe einer empirischen Beziehung folgender Form bestimmt wird:

$$\omega_d(n) = K/i_0(n)$$

wobei K eine Konstante in der Gesamtheit der reelen Zahlen ist, die beispielsweise je nach den Übertragungsbedingungen eingestellt werden kann.

**16.** Bewertungsverfahren nach Anspruch 15, wenn dieser von einem der Ansprüche 9 bis 12 abhängt, **dadurch gekennzeichnet, daß** die Konstante K der empirischen Beziehung in Abhängigkeit von dem von dem Vernachlässigbarkeitsfaktor ($\alpha$) angenommenen Wert eingestellt werden kann.

**17.** Bewertungsverfahren nach einem der vorhergehenden Ansprüche, das in dem Empfänger eines Fernmeldesystems eingesetzt wird, das mit einem System zur Leistungsregelung versehen ist, wodurch der Empfänger ein Regelsignal (TC(n)) in Richtung zum Sender sendet, damit der Sender seine Sendeleistung derart steuert, daß die von dem Empfänger empfangene Leistung im wesentlichen gleich einer geforderten Leistung ist, **dadurch gekennzeichnet, daß** es darin besteht, die Leistung des Kanals (C(n)) in Abhängigkeit von der empfangenen Leistung (R(n)) mit Hilfe der folgenden Beziehung zu bewerten:

$$C(n) \approx R(n) - 1/(1-z^{-1}).[TC(n-x)]$$

wobei n die Zeitvariable, z die Variable der Transformierten bei z und x die Gesamtverzögerung zwischen dem Zeitpunkt, zu dem das von dem Sender 10 entsandte Signal von dem Empfänger 20 empfangen wird, und dem Zeitpunkt, zu dem das Regelsignal von dem Sender 10 empfangen wird, sind.

**18.** Bewertungsverfahren nach einem der Ansprüche 1 bis 16, das in dem Empfänger eines Fernmeldesystems eingesetzt wird, das mit einem System zur Leistungsregelung versehen ist, wodurch der Empfänger ein Regelsignal (TC(n)) in Richtung des Senders sendet, damit der Sender seine Sendeleistung derart steuert, daß die von dem Empfänger empfangene Leistung im wesentlichen gleich einer geforderten Leistung ist, **dadurch gekennzeichnet, daß** es darin besteht, die Ableitung der Autokovarianz (Cov[C(n),C(n+i)]) der Leistung des Kanals zu bewerten, indem sie der Ableitung der Autokovarianz (Cov[T(n),T(n+i)]) der Leistung (T(n)), die von dem Sender entsandt wird, angeglichen wird:

$$Cov'[C(n),C(n+i)] \approx R'_{T(n)}[i] \approx \frac{1}{N}\sum_{j=n}^{n+N-1} T(j)\cdot\Delta T(j+i) \qquad pour\ 0 \le i \le i_{max}$$

wobei

$$\Delta T(j+i) = T(j+i+1) - T(j+i).$$

**19.** Bewertungsverfahren nach einem der Ansprüche 1 bis 16, das in dem Empfänger eines Fernmeldesystems eingesetzt wird, das mit einem System zur Leistungsregelung versehen ist, **dadurch gekennzeichnet, dass** es darin besteht, die Veränderungen der Leistung des Kanals (C(n)) gleich den Veränderungen der empfangenen Leistung (R(n)) durch den Empfänger 20 zu bewerten.

**20.** Bewertungsverfahren nach einem der vorhergehenden Ansprüche, welches Verfahren zwischen einer festen Station und einer mobilen Station eingesetzt wird, die miteinander sowohl in aufsteigende als auch in absteigende Richtung in Verbindung stehen, **dadurch gekennzeichnet, daß** es zum Bestimmen der Doppler-Verschiebung darin besteht durch Einsatz des Bewertungsverfahrens nach einem der Ansprüche 1 bis 21 die Doppler-Verschiebung jedes der aufsteigenden und absteigenden Kanäle zu bewerten und die auf diese Weise erhaltenen Verschiebungen zu verknüpfen.

**21.** Bewertungsverfahren nach Anspruch 20, **dadurch gekennzeichnet, daß** diese Verknüpfung eine gewichtete Summierung ist.

22. Empfänger eines Fernmeldesystems, das dazu vorgesehen ist, mit einem Sender in Verbindung treten zu können, welcher Empfänger eine Einheit (22) zur Messung der Leistung, die er von einem Sender (10) über einen Kanal (31) empfängt, und eine Einheit (21) zum Vergleichen dieser empfangenen Leistung mit einer geforderten Leistung und zur Übertragung eines Regelsignals (TC(n)) zu dem Sender (10), damit er seine Sendeleistung (T(n)) derart steuert, daß die von dem Empfänger empfangene Leistung im wesentlichen gleich der geforderten Leistung ist, umfasst, **dadurch gekennzeichnet, daß** er ferner eine Einheit (23) umfasst, um die Leistung des Kanals auf der Basis der Information über die empfangene Leistung und des Regelsignals zu bewerten, und eine Einheit (24), die auf der Basis der Bewertung der Leistung des Kanals, die von der Einheit (23) geliefert wird, und durch Einsatz eines Bewertungsverfahrens nach einem der Ansprüche 1 bis 19 ein Bewertungssignal der Doppler-Verschiebung liefert.

23. Sender eines Fernmeldsystems, der dazu vorgesehen ist, mit einem Empfänger in Verbindung treten zu können, welcher Sender von dem Empfänger, mit dem er in Verbindung steht, ein Regelsignal (RC(n)) empfängt und seine Sendeleistung derart steuert, daß die von dem Empfänger empfangene Leistung im wesentlichen gleich einer geforderten Leistung ist, **dadurch gekennzeichnet, daß** er eine Einheit (13) umfasst, die auf der Basis eines Signals über die von dem Sender entsandte Leistung und durch Einsatz eines Bewertungsverfahrens nach einem der vorhergehenden Ansprüche 1 bis 19 ein Bewertungssignal der Doppler-Verschiebung auf der Basis eines Signals über die von dem Sender entsandte Leistung liefert.

**Claims**

1. Method of estimating the speed of relative movement of a transmitter and a receiver in communication with one another via a channel of a telecommunications system and by means of a carrier wave, the method comprising a step of analyzing the statistical properties of the variations of the power of the channel by determining the autocovariance of the power of the said channel ($C(n)$), **characterised in that** it consists of calculating the said autocavariance ($Cov\ (C(n)\ C(n+i))$) for one instant ($n$) and for a plurality of instants ($n+i$) delayed with respect to the instant ($n$) of a predetermined number of delays ($i$), of determining the delay ($i_0$) for which the autocovariance reaches its first minimum, of deducing the Doppler Shift ($\omega_d(n)$) undergone by the carrier wave by means of the following relationship:

$$\omega_d(n) = K/[i_o(n)T_b]$$

where $K$ is a constant and $T_b$ is the duration of one bit, and of deducing, from the said Doppler shift, the said speed of relative movement.

2. Estimation method according to Claim 1, **characterised in that**, in order to determine the delay $(i_0(n))$ for which the said autocovariance reaches its first minimum, it consists of determining, from an instant ($n$) and for $N$ samples of channel power ($C(n+j)$ with $j = 1\ to\ N$), the delay $(i_0(n))$ such that :

$$\sum_{j=n}^{n+N-1} C(j) \bullet \Delta C(j + i_0(n)) = 0$$

with

$$\Delta C(j + i_0(n)) = C(j+i_0(n)+1)-C(j+i_0(n)).$$

3. Estimation method according to Claim 1 or 2, **characterised in that**, in order to determine the delay ($i_0(n)$), it consists of determining the two consecutive delays for which the respective derivatives of the autocovariance of the channel power are of opposite sign and of calculating, by linear extrapolation from the said two delays, the said delay ($i_0$).

**4.** Estimation method according to Claim 1, **characterised in that** it consists, from a sequence of *N* samples of the channel power *(C(n))*, of determining a sequence of a predetermined number ($i_{max}$ + 1) of estimates each representing, for a delay (*i*) varying from a null value to a maximum value ($i_{max}$), the derivativ *(Cov'[C(n), C(n+i)])* of the autocovariance of the channel power *(C(n))*, on determining the delay ($i_0(n)$) for which the said derivative of the autocovariance (*Cov'[C(n), C(n+$i_0$(n))]*) is zero and of deducing the Doppler shift ($\omega_d(n)$) from the said delay ($i_0(n)$).

**5.** Estimation method according to Claim 4, **characterised in that** the number of samples *N* in the said sequence is adjustable according to the presumed range of the relative speed of the transmitter and the receiver, and/or the presumed range of the relative acceleration of the transmitter and the receiver and/or the regularity of transmission of the power control command signals.

**6.** Estimation method according to Claim 4 or 5, **characterised in that** the predetermined number ($i_{max}$ + 1) of estimates of the derivative (*Cov'[C(n), C(n+i)], i = 0 to $i_{max}$*) of the autocovariance of the channel power *(C(n))* is adjustable according to the presumed range of the relative speed of the transmitter and the receiver, and/or the presumed range of the relative acceleration of the transmitter and the receiver and/or the regularity of transmission of the power control command signals.

**7.** Estimation method according to one of Claims 4 to 6, **characterised in that**, in order to estimate the derivative (*Cov'[C(n), C(n+i)]*) of the autocovariance of the channel power *(C(n))*, it consists of estimating the derivative of the autocorrelation ($R_{C(n)}[i]$) ofthe channel power *(C(n))*.

**8.** Estimation method according to Claim 4, 5 or 6, **characterised in that** it consists of filtering, in a low-pass filter, the $i_{max}$ + 1 estimates of the derivative of the autocovariance (*Cov'[C(n), C(n+i)]*) or of the derivative of the autocorrelation ($R'_{C(n)}[i]$) of the channel power *(C(n))* before determining the delay ($i_0(n)$).

**9.** Estimation method according to Claim 8, **characterised in that** the said filter delivers, for each delay (*i*), a filtered value ($\mathcal{R}_{C(n)}[i]$) given by the following relationships:

$$\mathcal{R}_{C(n)}[i] = (1-\alpha) \cdot R'_{C(n)}[i] + \alpha \cdot \mathcal{R}_{C(n)}[i-1] \ \forall \ i > 0,$$

*and*

$$\mathcal{R}_{C(n)}[0] = (1-\alpha) \, R'_{C(n)}[0].$$

where $\alpha$ is a forgetting factor.

**10.** Estimation method according to Claim 9, **characterised in that** the forgetting factor ($\alpha$) is adjustable according to the presumed noise level of the transmission of the channel or according to the result of the evaluation of the signal to interference ratio necessary for the closed-loop power control process.

**11.** Estimation method according to Claim 9 or 10, **characterised in that** the number (*N*) of samples in the said sequence of samples of the channel power *(C(n))* is adjustable according to the value taken by the forgetting factor ($\alpha$).

**12.** Estimation method according to Claim 9, 10 or 11, **characterised in that** the predetermined number ($i_{max}$ + 1) of estimates of the derivative (*Cov'[C(n), C(n+i)], i = 0 to $i_{max}$*) of the autocovariance of the channel power *(C(n))* is adjustable according to the value taken by the forgetting factor ($\alpha$).

**13.** Estimation method according to one of Claims 4 to 12, **characterised in that**, in order to determine the delay ($i_0$), it consists of determining the two consecutive delays for which the respective derivatives of the autocorrelation of the channel power are of opposite sign and of calculating by linear extrapolation, from the said two delays, the said delay ($i_0$).

**14.** Estimation method according to one of Claims 1 to 13, **characterised in that** the Doppler shift ($\omega_d(n)$) is determined by means of a table giving the Doppler shift ($\omega_d$) corresponding to each delay ($i_0$).

**15.** Estimation method according to one of Claims 1 to 13, **characterised in that** the Doppler shift ($\omega_d(n)$) is determined by means of an empirical relationship of the form:

$$\omega_d(n) = K/i_0(n)$$

where $K$ is a constant in the set of real numbers, for example adjustable according to the transmission conditions.

**16.** Estimation method according to Claim 15 when the latter depends on one of Claims 9 to 12, **characterised in that** the constant $K$ of the said empirical relationship is adjustable according to the value taken by the forgetting factor ($\alpha$) of the said filter.

**17.** Estimation method according to one of the preceding claims, of the type used in the receiver of a telecommunications system equipped with a power control system by means of which the said receiver sends, to the transmitter, a control signal ($TC(n)$) so that the said transmitter commands its transmission power in order that the power received by the said receiver is substantially equal to a required power, **characterised in that** it consists of estimating the channel power ($C(n)$) as a function of the received power ($R(n)$), by means of the following relationship:

$$C(n) \approx R(n) - 1/(1\text{-}z^{-1}).[TC(n\text{-}x)]$$

$n$ is the time variable, $z$ the $z$-transform variable, and $x$ the total delay between the time at which the signal transmitted by the transmitter 10 is received by the receiver 20 and the time at which the control signal is received by the transmitter 10.

**18.** Estimation method according to one of Claims 1 to 16, of the type used in the transmitter of a telecommunications system equipped with a power control system by means of which the said receiver sends, to the transmitter, a control signal ($TC(n)$) so that the said transmitter commands its transmission power ($T(n)$) in order that the power received by the said receiver is substantially equal to a required power, **characterised in that** it consists of estimating the derivative of the autocovariance ($Cov[C(n),C(n+i)]$) of the channel power by making it equal to the derivative of the autocovariance ($Cov[T(n),T(n+i)]$) of the power ($T(n)$) transmitted by the said transmitter:

$$Cov'[C(n),C(n+i)] \approx R'_{T(n)}[i] \approx \frac{1}{N} \sum_{j=n^*}^{n+N-1} T(j) \bullet \Delta T(j+i) \quad for \quad 0 \leq i \leq i_{max}$$

where

$$\Delta T(j+i) = T(j+i+1) - T(j+i).$$

**19.** Estimation method according to one of Claims 1 to 16, of the type used in the receiver of a telecommunications system which is not equipped with a power control system, **characterised in that** it consists of estimating the variations in the channel power ($G(n)$) as being equal to the variations in the power received ($R(n)$) by the said receiver 20.

**20.** Estimation method according to one of the preceding claims, the said method being used between a fixed station and a mobile station communicating with one another in both an inbound direction and an outbound direction, **characterised in that** it consists, in order to determine the said Doppler shift, of estimating, using an estimation method according to one of Claims 1 to 21, the Doppler shift of each of the inbound and outbound channels and of combining the said shifts thus obtained.

**21.** Estimation method according to Claim 20, **characterised in that** the said combination is a weighted summation.

**22.** Receiver of a telecommunications system provided to be capable of entering into communication with a transmitter, the said receiver having a unit (22) for measuring the power it receives from a transmitter (10) by means of a channel (31), a unit (21) for comparing the said received power with a required power and for transmitting power (*TC(n)*) to the said transmitter (10) so that it commands its transmission power (*T(n))* so that the power received by the said receiver is substantially equal to the said required power, **characterised in that** it also has a unit (23) for estimating the power of the said channel from the information concerning the received power and from the control signal, and a unit (24) which, on the basis of the estimate of the channel power delivered by the unit (23) and using an estimation method according to one of claims 1 to 19, delivers a Doppler shift estimation signal.

23. Transmitter of a telecommunications system provided to be capable of entering into communication with a receiver, the said transmitter receiving, from the said receiver with which it is in communication, a control signal (*RC(n)*), and commanding its transmission power in order that the power received by the said receiver is substantially equal to a required power, **characterised in that** it has a unit (13) which, on the basis of a signal relating to the power transmitted by the said transmitter and using an estimation method according to one of the preceding claims 1 to 19, delivers a Doppler shift estimation signal on the basis of a signal relating to the power transmitted by the said transmitter.

## Fig. 1

$s(n)$

$30$

$y(n)$

$10$

$20$

## Fig. 2

$41$

$R'_{c(n)}[i]$

$42$

$R_{c(n)}[i]$

$43$

$i_0(n)$

$44$

$\omega_d(n)$

Fig. 3

Fig. 6

Fig. 4

Fig. 5